# EUROPEAN PATENT APPLICATION

(11) **EP 4 722 515 A1**
(43) Date of publication of application: **08.04.2026**
(21) Application number: 25204644.6
(22) Date of filing: 25.09.2025
(51) Int. Cl.: F02C 7/14, F02C 7/18

(54) **MODULATED AIR FLOW HEAT EXCHANGER SYSTEM IN BI-FI DUCT**

(30) Priority: 04.10.2024 US 202418906248
(71) Applicant: RTX Corporation, Farmington, CT 06032 (US)
(72) Inventor: Akin, John, Carmel, 46033 (US); Clark, Thomas E., Wells, 04090 (US); Choe, Jung Muk, Glastonbury, 06033 (US)
(74) Representative: Schmitt-Nilson Schraud Waibel Wohlfrom Patentanwälte Partnerschaft mbB

(57) **Abstract**

A modulated air flow heat exchanger system in a bifurcation duct including an air oil cooler located proximate the bifurcation duct; at least one door positioned upstream of the air oil cooler proximate the bifurcation duct, wherein the at least one door controls a flow of a fan discharge airflow through the air oil cooler; and an actuator in operative communication with the at least one door.

## Description

The present disclosure is directed to an improved modulated air flow heat exchanger system in a bifurcation duct.

In Hybrid Electric commercial engine concepts, a need to provide significant cooling flow to heat exchangers dedicated to power electronics and motors has been consistently identified.

The heat loads produced by hybrid-electric systems are not necessarily correlated to engine power. For example, while the engine is at ground idle thrust a maximum cooling demand exists. The heat loads drive the sizing, and thus frontal area and drag, for Air-Oil Coolers (AOC) needed for the electrical system heat removal. The cooling capacity and resulting frontal area are not required at other flight regimes which are more sensitive to aero drag, like climb and cruise conditions.

New hybrid electric engines possess modes of operation where high heat rejection is required at low engine speed and low fan flow driving a desire to modulate cooling flow and at cruise. The modulated low reduces drag associated to the hybrid electric thermal management system. Air oil cooler inlets have not been previously controlled for power electronic thermal management systems.

In accordance with the present disclosure, there is provided a modulated air flow heat exchanger system in a bifurcation duct comprising an air oil cooler located proximate the bifurcation duct; at least one door positioned upstream of the air oil cooler proximate the bifurcation duct, wherein the at least one door controls a flow of a fan discharge airflow through the air oil cooler; and an actuator in operative communication with the at least one door.

Particular embodiments further may include at least one, or a plurality of, the following optional features, alone or in combination with each other:

A further embodiment of any of the foregoing embodiments may additionally and/or alternatively include the at least one door is configured to fail open responsive to a predetermined operating condition for the airflow to flow through the air oil cooler.

A further embodiment of any of the foregoing embodiments may additionally and/or alternatively include the actuator comprises linkages in operative communication with the at least one door configured to move the at least one door responsive to actuation of the actuator.

A further embodiment of any of the foregoing embodiments may additionally and/or alternatively include the actuator is a hydraulic actuator.

A further embodiment of any of the foregoing embodiments may additionally and/or alternatively include the hydraulic actuator is in operative communication with a lubrication oil system.

A further embodiment of any of the foregoing embodiments may additionally and/or alternatively include the lubrication oil system is in operative communication with a thermal management system.

A further embodiment of any of the foregoing embodiments may additionally and/or alternatively include the modulated air flow heat exchanger system in a bifurcation duct further comprising a biasing member in operative communication with the actuator, the biasing member configured to open the at least one door responsive to a predetermined operating condition.

In accordance with the present disclosure, there is provided a gas turbine engine having a modulated air flow heat exchanger system in a bifurcation duct comprising: a case enclosing an engine core centered about a centerline of the gas turbine engine, the bifurcation duct formed between the case and the engine core; a fan positioned to produce a fan discharge air flow within the case; an air oil cooler located downstream of the fan within the case and proximate the bifurcation duct; at least one door positioned upstream of the air oil cooler proximate the bifurcation duct, wherein the at least one door controls the flow of the fan discharge airflow through the air oil cooler; and an actuator in operative communication with the at least one door.

Particular embodiments further may include at least one, or a plurality of, the following optional features, alone or in combination with each other:

A further embodiment of any of the foregoing embodiments may additionally and/or alternatively include the actuator comprises a hydraulic actuator having a hydraulic oil fluidly coupled with a control valve in operative communication with a controller.

A further embodiment of any of the foregoing embodiments may additionally and/or alternatively include the gas turbine engine having the modulated air flow heat exchanger system in the bifurcation duct further comprising a feedback device in operative communication with the actuator, wherein the feedback device is configured to measure a position of at least one of the actuator and/or the at least one door.

A further embodiment of any of the foregoing embodiments may additionally and/or alternatively include the at least one door is positioned to allow a minimum airflow in a first position; and the at least one door is positioned to allow a maximum airflow in a second position.

A further embodiment of any of the foregoing embodiments may additionally and/or alternatively include the minimum airflow is ten percent of a total flow area available for the fan discharge airflow to pass through to the air oil cooler, the maximum airflow is one hundred percent of the total flow area.

A further embodiment of any of the foregoing embodiments may additionally and/or alternatively include the at least one door is configured to fail open responsive to a predetermined operating condition for the airflow to flow through the air oil cooler.

In accordance with the present disclosure, there is provided a process for a gas turbine engine having a modulated air flow heat exchanger system in a bifurcation duct comprising enclosing an engine core with a case centered about a centerline of the gas turbine engine; forming the bifurcation duct between the case and the engine core; positioning a fan to produce a fan discharge air flow within the case; locating an air oil cooler downstream of the fan within the case and proximate the bifurcation duct; positioning a pair of doors upstream of the air oil cooler proximate the bifurcation duct; controlling the flow of the fan discharge airflow through the air oil cooler with the pair of doors; coupling an actuator in operative communication with the pair of doors; and configuring the pair of doors open for the airflow to flow through the air oil cooler responsive to failure of the actuator during a predetermined operating condition.

Particular embodiments further may include at least one, or a plurality of, the following optional features, alone or in combination with each other:

A further embodiment of any of the foregoing embodiments may additionally and/or alternatively include the process further comprising coupling the actuator with linkages in operative communication with the pair of doors; and configuring the pair of doors to move responsive to actuation of the actuator.

A further embodiment of any of the foregoing embodiments may additionally and/or alternatively include the actuator comprises a hydraulic actuator having a hydraulic oil fluidly coupled with a control valve in operative communication with a controller.

A further embodiment of any of the foregoing embodiments may additionally and/or alternatively include the process further comprising coupling a feedback device in operative communication with the actuator; and configuring the feedback device to measure a position of at least one of the actuator and/or the pair of doors.

A further embodiment of any of the foregoing embodiments may additionally and/or alternatively include the process further comprising configuring the pair of doors to allow a minimum airflow in a first position; and configuring the pair of doors to allow a maximum airflow in a second position.

A further embodiment of any of the foregoing embodiments may additionally and/or alternatively include the minimum airflow is ten percent of a total flow area available for the fan discharge airflow to pass through to the air oil cooler, the maximum airflow is one hundred percent of the total flow area.

A further embodiment of any of the foregoing embodiments may additionally and/or alternatively include the process further comprising coupling a biasing member in operative communication with the actuator; and configuring the biasing member to open the pair of doors responsive to a predetermined operating condition.

Other details of the modulated air flow heat exchanger system in a bifurcation duct are set forth in the following detailed description and the accompanying drawings wherein like reference numerals depict like elements.
Fig. 1 is a schematic representation of gas turbine engine with exemplary modulated airflow heat exchanger.
Fig. 2 is a schematic representation of an exemplary modulated airflow heat exchanger.
Fig. 3 is a schematic representation of an exemplary modulated airflow heat exchanger.
Fig. 4 is a schematic representation of an exemplary modulated airflow heat exchanger.
Fig. 5 is a schematic representation of an exemplary modulated airflow heat exchanger.
Fig. 6 is a schematic representation of an exemplary modulated airflow heat exchanger.
Fig. 7 is a schematic representation of an exemplary modulated airflow heat exchanger.
Fig. 8 is a schematic representation of an exemplary modulated airflow heat exchanger.

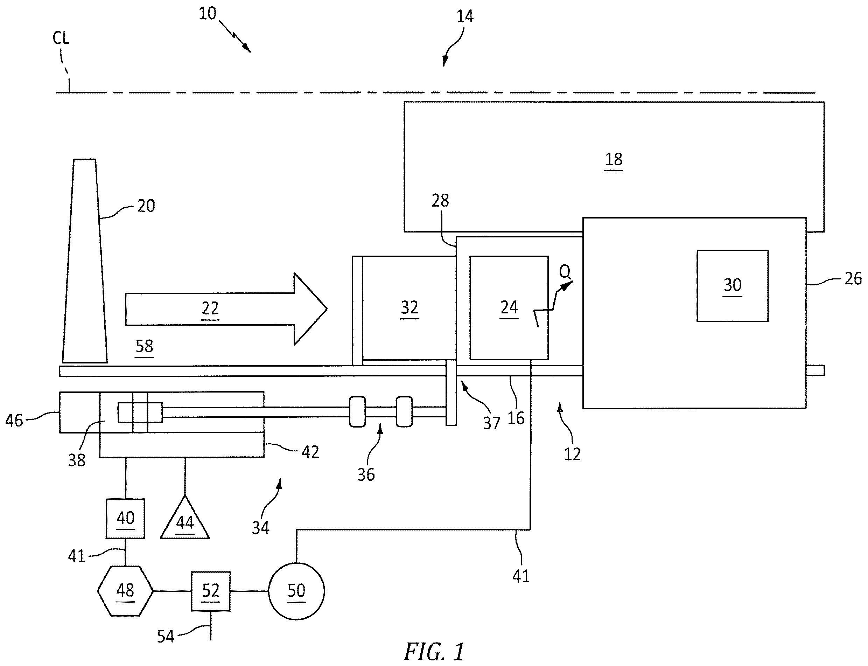

Referring now to Fig. 1, a modulated air flow heat exchanger system 10 in a bifurcation duct 12 of a gas turbine engine 14. The gas turbine engine 14 includes a case 16 that encloses an engine core 18 centered about a centerline CL of the gas turbine engine 14. A fan 20 is positioned to produce a fan discharge air flow 22 within the case 16. An air oil cooler 24 is located downstream of the fan 20 within the case 16 and proximate a bifurcation 26 extending between the engine core 18 and the case 16. The bifurcation 26, case 16 and engine core 18 can define a bifurcation duct section 28 of the gas turbine engine 14. A variety of electrical cables and electronic components 30 can be located within the bifurcation duct section 28.

A set of doors 32 can be located upstream of the air oil cooler 24. The doors 32 can control the flow of fan discharge airflow 22 flowing past the air oil cooler 24. The doors 32 can include a variety of configurations detailed below. The doors 32 can control the flow of airflow 22 through the bifurcation duct section 28. The doors 32 can be configured as fail open, that is, the doors 32 will be in an open position upon a failure as a failsafe state to allow the cooling airflow 22 to flow over the air oil cooler 24.

A door actuator 34 can be in operative communication with the doors 32. The door actuator 34 can open and close the doors 32 to varying degrees. The door actuator 34 can include linkages 36 in operative communication with the doors 32 that move the doors 32 upon actuation of the door actuator 34. The linkages 36 between actuator 34 and doors 32 can include pivot points 37 on the fan case 16.

The door actuator 34 can include a linear actuator 38 in operative communication with the linkages 36. In alternative embodiments, the door actuator 34 can include a rotary hydraulic actuator, a jackscrew, an electro-mechanical actuator and the like 34a. The linear actuator 38 can be mounted to the case 16. The linear actuator 38 provides the linear motion that moves the linkages 36. In an exemplary embodiment, the linear actuator 38 can be hydraulic, that is, an oil driven linear actuator 38. The linear actuator 38 can be in operative communication with a hydraulic oil 40. The hydraulic oil 40 can be a lubricating oil 41 employed with the gas turbine engine 14. In an exemplary embodiment, the hydraulic oil 40 can be from a loop of electronics thermal management oil. The hydraulic oil 40 can be controlled employing a control valve 42 in operative communication with a controller 44. The controller 44 can provide control commands for actuating the doors 32 with inputs based on oil 41 temperature feedback. In an exemplary embodiment, the control valve 42 can be an electro-hydraulic servo valve. A feedback device 46, such as a linear variable differential transformer can be in operative communication with the linear actuator 38. The linear variable differential transformer 46 can be configured to measure the position of the linear actuator 38 and/or the doors 32. In an exemplary embodiment, the controller 44 can be coupled with a proximity switch and solenoid control for simple open and close functions instead of fine position control and feedback. The controller 44 can be configured to control the control valve 42 with inputs based on electrical load within the gas turbine engine 14.

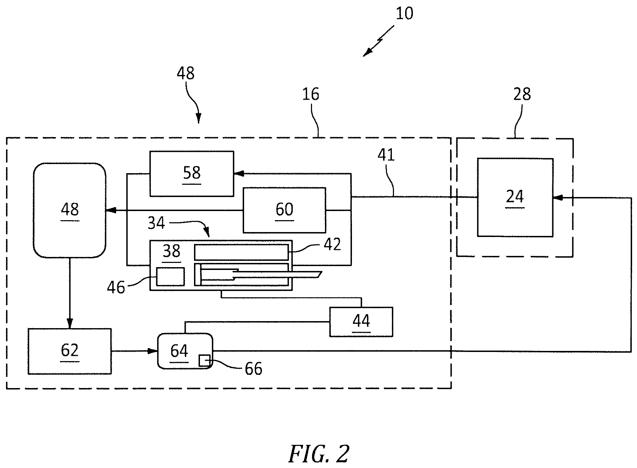

Referring also to Fig. 2, a schematic of an exemplary embodiment, the lubricating oil 41 can be part of a lubrication system 48 for the gas turbine engine 14 in an aircraft 50. The lubrication system 48 can include a fuel heat exchanger 52 having passageways through which the lubricating oil 41 passes to be cooled by a fuel stream 54 flowing past and around these passageways. This arrangement permits the lubricating oil 41 to reject heat to the fuel 54 in the aircraft thereby heating that fuel 54 to help preheat the fuel for efficient combustion processes. Because in some operational situations more heat is generated in the lubricating oil 41 than can be accepted for warming the fuel, a portion of the lubricating oil 41 can be forced to bypass the fuel heat exchanger 52 for the fuel 54 and the lubricating oil 41, and the oil 41 can be directed to the air oil cooler 24 where the thermal energy Q is transferred to the air 22 in the airstream provided by the fan 20 of the gas turbine engine 14.

A motor controller unit 58 can be in operative communication with the lubricating oil 41. A motor/generator 60 can be in operative communication with the lubricating oil 41. An electric oil pump 62 can be in operative communication with the lubricating oil 41. A filter and sensor assembly 64 can be in operative communication with the lubricating oil 41. A temperature sensor 66 can be located proximate the filter and sensor assembly 64 and configured to provide control inputs to the controller 44.

A fan duct 56 is provided in a fan cowling 58 through which a portion of the airstream 22 is diverted, and the air oil cooler 24 is located in the duct 12 so that the lubricating oil 41 passing through passageways in the air oil cooler 24 is cooled by the airstream 22 flowing past these passageways in the air oil cooler 24. If such additional cooling of the oil 41 is not needed in a flight situation, the lubricating oil 41 can bypass the air oil cooler 24.

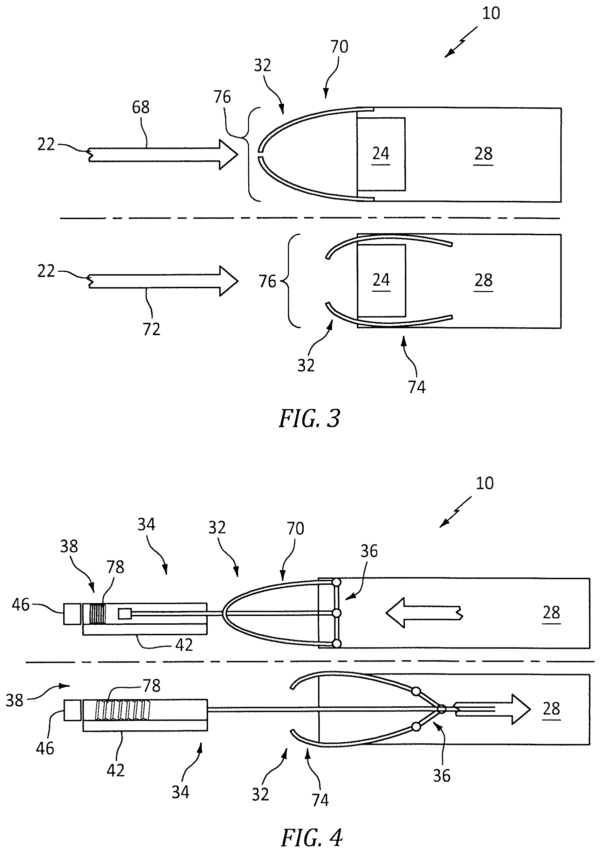

Referring also to Fig. 3, Fig. 4, Fig. 5, Fig. 6, Fig. 7 and Fig. 8, showing various exemplary embodiments of the modulated airflow heat exchanger 10.

The exemplary modulated airflow heat exchanger 10 shown in Fig. 3 includes the doors 32 located upstream of the air oil cooler 24 located proximate the bifurcation duct section 28. The doors 32 can be configured to allow a minimum airflow 68 in a first position 70. The minimum airflow 68 can be a flow rate that allows for cooling of the oil 41 while minimizing the aerodynamic drag through the air oil cooler 24. The doors 32 can be configured to allow a maximum airflow 72 in a second position 74. The second position 74 creates conditions for the maximum airflow 72 flow rate that allows for larger heat transfer and cooling of the oil 41 while maximizing the aerodynamic drag through the air oil cooler 24. The second position 74 can be a failsafe position or fail open position that is obtained upon a failure of the linear actuator 38 or other components related to actuation of the doors 32.

In an exemplary embodiment, the minimum airflow 68 can be approximately ten percent of a total flow area 76 available for the fan discharge airflow 22 to pass through to the air oil cooler 24. The maximum airflow 72 can be approximately one hundred percent of the total flow area 76. The doors 32 can be adjusted to open the flow area 76 to any value ranging from the ten percent to the one hundred percent depending on the operating conditions of the gas turbine engine 14.

Referring also to Fig. 4, the doors 32 are shown in operative communication with the door actuator 34. The door actuator 34 is shown upstream of the doors 32. The linear actuator 38 is coupled with the linkages 36 and doors 32. It can be seen that the actuator 34 in this embodiment extends the linear actuator 38 to open the doors 32 and contacts the linear actuator 38 to close the doors 32. A biasing member 78 can be included to provide a passive (non-hydraulic) actuation of the linear actuator 38. For example, upon loss of hydraulic power, the biasing member 78 can actuate the linkages 36 and open the doors 32.

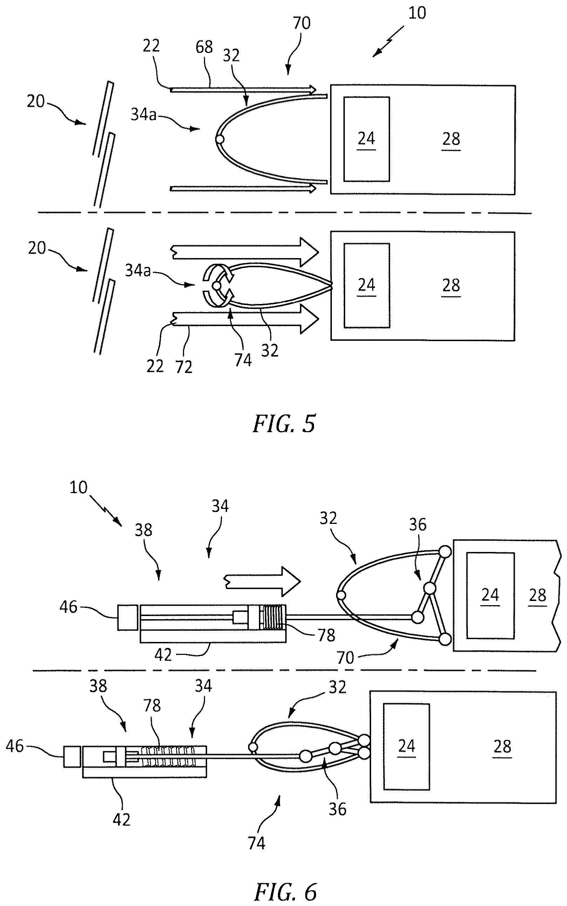

Referring also to Fig. 5, the doors 32 are shown in operative communication with the door actuator 34a. The door actuator 34a can be the rotary hydraulic actuator, a jackscrew, an electro-mechanical actuator and the like 34a.

Referring also to Fig. 6, the doors 32 are shown in operative communication with the door actuator 34. The door actuator 34 is upstream relative to the doors 32. The biasing member 78 is shown to actuate to open the doors 32 as a failsafe feature.

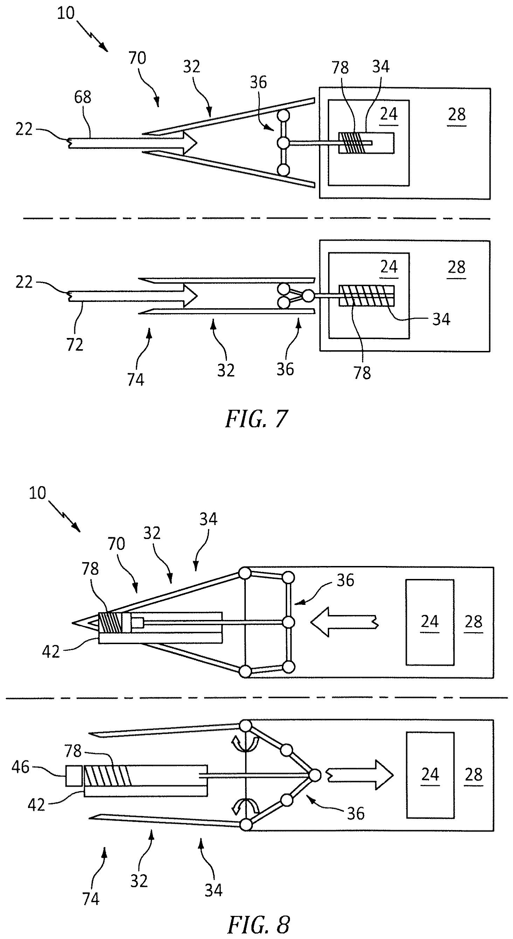

Referring also to Fig. 7, the doors are shown in operative communication with the door actuator 34. The door actuator 34 is located downstream of the doors 32 and within the bifurcation duct section 28. The biasing member 78 is shown to bias the doors 32 in an open position as a failsafe.

Referring also to Fig. 8, the doors are shown in operative communication with the door actuator 34. The door actuator 34 is shown upstream of the doors 32 and external from the bifurcation duct section 28. The biasing member 78 is shown to bias the doors 32 in an open position as a failsafe.

A technical advantage of the disclosed modulated air flow heat exchanger system in a bifurcation duct includes the capacity to modulate the cooling flow to the air oil cooler to minimize aero drag when not required during various parts of the flight envelope.

Another technical advantage of the disclosed modulated air flow heat exchanger system in a bifurcation duct includes a failsafe feature to open the doors ensuring cooling airflow to the air oil cooler.

Another technical advantage of the disclosed modulated air flow heat exchanger system in a bifurcation duct includes employing hydraulic oil to actuate the doors.

Another technical advantage of the disclosed modulated air flow heat exchanger system in a bifurcation duct includes a system that operates during periods of high electrical load and low forward velocity and thrust to open the doors to maximize cooling flow to the air oil cooler.

Another technical advantage of the disclosed modulated air flow heat exchanger system in a bifurcation duct includes a system that operates during periods of lower electrical load and high forward velocity and thrust, closing the doors modulated down to minimize aero drag when full frontal area of the air oil cooler is not required to meet cooling needs.

Another technical advantage of the disclosed modulated air flow heat exchanger system in a bifurcation duct includes the capacity to optimize sizing the air oil cooler for ground idle conditions while reducing aero drag induced main fuel burn impacts.

Another technical advantage of the disclosed modulated air flow heat exchanger system in a bifurcation duct includes a system optimized for a hybrid product so that door modulation can represent a fuel burn savings for commercial missions compared to an unmodulated air oil cooler inlet.

There has been provided a modulated air flow heat exchanger system in a bifurcation duct. While the modulated air flow heat exchanger system in a bifurcation duct has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A modulated air flow heat exchanger system in a bifurcation duct comprising:
an air oil cooler located proximate the bifurcation duct;
at least one door positioned upstream of the air oil cooler proximate the bifurcation duct, wherein the at least one door controls a flow of a fan discharge airflow through the air oil cooler; and
an actuator in operative communication with the at least one door.

2. The modulated air flow heat exchanger system in a bifurcation duct according to claim 1, wherein the at least one door is configured to fail open responsive to a predetermined operating condition for the airflow to flow through the air oil cooler.

3. The modulated air flow heat exchanger system in a bifurcation duct according to claim 1 or 2, wherein the actuator comprises linkages in operative communication with the at least one door configured to move the at least one door responsive to actuation of the actuator.

4. The modulated air flow heat exchanger system in a bifurcation duct according to any of claims 1 to 3, wherein the actuator is a hydraulic actuator.

5. The modulated air flow heat exchanger system in a bifurcation duct according to claim 4, wherein the hydraulic actuator is in operative communication with a lubrication oil system.

6. The modulated air flow heat exchanger system in a bifurcation duct according to claim 5, wherein the lubrication oil system is in operative communication with a thermal management system.

7. The modulated air flow heat exchanger system in a bifurcation duct according to any of claims 1 to 6, further comprising:
a biasing member in operative communication with the actuator, the biasing member configured to open the at least one door responsive to a predetermined operating condition.

8. A gas turbine engine having the modulated air flow heat exchanger system in the bifurcation duct according to any of claims 1 to 7, the gas turbine engine comprising:
a case enclosing an engine core centered about a centerline of the gas turbine engine, the bifurcation duct formed between the case and the engine core;
a fan positioned to produce a fan discharge air flow within the case;
wherein the air oil cooler is located downstream of the fan within the case and proximate the bifurcation duct; and
wherein the at least one door controls the flow of the fan discharge airflow through the air oil cooler.

9. The gas turbine engine having the modulated air flow heat exchanger system in the bifurcation duct according to claim 8, wherein the actuator comprises a hydraulic actuator having a hydraulic oil fluidly coupled with a control valve in operative communication with a controller.

10. The gas turbine engine having the modulated air flow heat exchanger system in the bifurcation duct according to claim 8 or 9, further comprising:
a feedback device in operative communication with the actuator, wherein the feedback device is configured to measure a position of at least one of the actuator and/or the at least one door.

11. The gas turbine engine having the modulated air flow heat exchanger system in the bifurcation duct according to any of claims 8 to 10, wherein the at least one door is positioned to allow a minimum airflow in a first position; and the at least one door is positioned to allow a maximum airflow in a second position.

12. The gas turbine engine having the modulated air flow heat exchanger system in the bifurcation duct according to claim 11, wherein the minimum airflow is ten percent of a total flow area available for the fan discharge airflow to pass through to the air oil cooler, the maximum airflow is one hundred percent of the total flow area.

13. A process for a gas turbine engine having a modulated air flow heat exchanger system in a bifurcation duct comprising:
enclosing an engine core with a case centered about a centerline of the gas turbine engine;
forming the bifurcation duct between the case and the engine core;
positioning a fan to produce a fan discharge air flow within the case;
locating an air oil cooler downstream of the fan within the case and proximate the bifurcation duct;
positioning a pair of doors upstream of the air oil cooler proximate the bifurcation duct;
controlling the flow of the fan discharge airflow through the air oil cooler with the pair of doors;
coupling an actuator in operative communication with the pair of doors; and
configuring the pair of doors open for the airflow to flow through the air oil cooler responsive to failure of the actuator during a predetermined operating condition.

14. The process of claim 13, further comprising:
coupling the actuator with linkages in operative communication with the pair of doors; and
configuring the pair of doors to move responsive to actuation of the actuator; and/or
wherein the actuator comprises a hydraulic actuator having a hydraulic oil fluidly coupled with a control valve in operative communication with a controller; and/or
further comprising:
coupling a feedback device in operative communication with the actuator; and
configuring the feedback device to measure a position of at least one of the actuator and/or the pair of doors.

15. The process of claim 13 or 14, further comprising:
configuring the pair of doors to allow a minimum airflow in a first position; and
configuring the pair of doors to allow a maximum airflow in a second position; and/or
wherein the minimum airflow is ten percent of a total flow area available for the fan discharge airflow to pass through to the air oil cooler, the maximum airflow is one hundred percent of the total flow area: and/or
further comprising:
coupling a biasing member in operative communication with the actuator; and
configuring the biasing member to open the pair of doors responsive to a predetermined operating condition.
